# EUROPÄISCHE PATENTSCHRIFT

(11) **EP 1 279 680 B1**
(45) Veröffentlichungstag und Bekanntmachung des Hinweises auf die Patenterteilung: **25.10.2006**
(21) Anmeldenummer: 02014927.4
(22) Anmeldetag: 08.07.2002
(51) Int. Cl.: C08B 11/193

(54) **Verfahren zur Herstellung von Alkylhydroxyalkylcellulose**
Process for preparing alkyl hydroxyalkyl cellulose
Procédé de préparation d'alkylhydroxyalkylcellulose

(30) Priorität: 20.07.2001 DE 10135464
(43) Veröffentlichungstag der Anmeldung: 29.01.2003
(73) Patentinhaber: Wolff Cellulosics GmbH & Co.KG, 29656 Walsrode (DE)
(72) Erfinder: Dannhorn, Wofgang, Dr., 29614 Soltau (DE); Klohr, Erik-Andreas, Dr., 29664 Walsrode (DE); Kowollik, Martin, 29683 Fallingbostel (DE); Schlesiger, Hartwig, Dr., 29683 Fallingbostel (DE); Pannek, Jörn-Bernd, Dr., 29683 Fallingbostel (DE)
(74) Vertreter: Feldhues, Michael L.F.

(56) Entgegenhaltungen:
- EP-A- 0 835 881
- EP-A- 1 180 526
- DE-A- 3 909 070
- DE-A- 4 015 160
- US-A- 4 096 325
- PATENT ABSTRACTS OF JAPAN vol. 1998, no. 11, 30. September 1998 (1998-09-30) & JP 10 158302 A (SHIN ETSU CHEM CO LTD), 16. Juni 1998 (1998-06-16) & DATABASE WPI Week 199834 Derwent Publications Ltd., London, GB; AN 1998-393478
- PATENT ABSTRACTS OF JAPAN vol. 10, no. 43 (C-329), 20. Februar 1986 (1986-02-20) & JP 60 192702 A (SHINETSU KAGAKU KOGYO KK), 1. Oktober 1985 (1985-10-01) & DATABASE WPI Week 198545 Derwent Publications Ltd., London, GB; AN 1985-280998

## Beschreibung

Die hier beschriebene Erfindung betrifft ein Verfahren zur Herstellung von Alkylhydroxyalkylcellulosen, bevorzugt Methylhydroxyethylcellulose (MHEC) und Methylhydroxypropylcellulose (MHPC), besonders bevorzugt Methylhydroxypropylcellulose mit definiertem DS (degree of substitution) Methylgruppen und definiertem MS (molar substitution) Hydroxyalkylgruppen, bevorzugt Hydroxyethylgruppen und Hydroxypropylgruppen, besonders bevorzugt Hydroxypropylgruppen. Das erfindungsgemäße Verfahren gestattet bei hoher Chemikalienausbeute und guter Reproduzierbarkeit eine breite Variation der strukturellen Produktmerkmale anteilige und gesamte Substitutionshöhe sowie der Molekularität (Viskositätsergiebigkeit). Die resultierenden Produkte sind in Abhängigkeit vom Substitutionsgrad wasserlöslich bis löslich in organischen Solvenzien und können in unterschiedlichen Anwendungsbereichen, beispielsweise als Konsistenzregler und Verarbeitungshilfsmittel in mineralischen und dispersionsbasierenden Baustoffsystemen oder bei der Herstellung von kosmetischen und pharmazeutischen Präparaten, eingesetzt werden.

Die artenreiche Stoffklasse der Celluloseether, darunter die Gruppe der binären AIkylhydroxyalkylcellulosen mit den kommerziell verwerteten Vertretern Methylhydroxyethylcellulose (MHEC) und Methylhydroxypropylcellulose (MHPC), ist seit mehreren Jahrzehnten universitäres und industrielles Betätigungsfeld und vielfach beschrieben. Eine übersichtliche Darstellung der chemischen Grundlagen und Prinzipien der Herstellung (Herstellverfahren und Verfahrensschritte) sowie eine stoffliche Zusammenstellung und Beschreibung der Eigenschaften und Anwendungsmöglichkeiten der verschiedenen Derivate gibt beispielsweise Houben-Weyl, Methoden der Organischen Chemie, Makromolekulare Stoffe, 4. Auflage, Band E 20, S. 2042 (1987).

Die beschriebenen und angewandten Verfahren zur Herstellung von Alkylhydroxyalkylcellulosen, wie z.B. Methylhydroxyethylcellulose und Methylhydroxypropylcellulose, beruhen entweder auf einer heterogenen (mehrphasiges Stoffgemisch) oder homogenen (z.B. einphasige Lösung) Reaktionsführung. Der Prozessablauf selbst kann entweder diskontinuierlich (batch-Fahrweise) oder kontinuierlich gestaltet sein. Die heterogene Reaktionsführung wird weiterhin in das sog. Gasphasenverfahren (ohne fluides Reaktionsmedium) und das sog. Slurry-Verfahren (in Gegenwart eines fluiden Reaktionsmediums) unterschieden.

Sämtlichen beschriebenen und technisch umgesetzten Verfahrensvarianten zur Herstellung von Alkylhydroxyalkylcellulosen, z.B. Methylhydroxyalkylcellulose, liegt das folgende chemische Reaktionsprinzip zu Grunde:

In einem vorgelagerten Teilschritt erfolgt die Aktivierung des cellulosischen Ausgangsmaterials, vorzugsweise mit Alkalilauge. Nachfolgend wird die gebildete Alkalicellulose mit dem entsprechenden Alkylenoxid und Methylchlorid forciert umgesetzt, wobei zweckmäßig ggf. überschüssig eingesetztes Alkali mit überstöchiometrischen Mengen Methylchlorid weitgehend neutralisiert wird. Im anschließenden Reinigungsschritt werden gebildetes Salz und sonstige Nebenprodukte abgetrennt, vorzugsweise durch Heißwasserwäsche.

In der DE-A 2402740, der US-A 2949452 und der EP-A 134465 werden sogenannte Gasphasenverfahren zur Herstellung von MHPC beschrieben, bei denen keine fluiden bzw. kondensierten Medien während der Veretherungsreaktion zugegen sind. Vorteilig kann bei diesen Verfahren die Substitution (DS-Wert und MS-Wert) über einen breiten Bereich variiert werden. Wegen Fehlen eines fluiden Wärmeträgers kann jedoch die Exothermie der chemischen Reaktionen nur unzureichend kontrolliert werden, zudem tritt ein Verteilungsproblem für eingesetztes Alkali und die Reaktanden auf. In Summe äußert sich dies in einer nur mäßigen Reproduzierbarkeit der Substitution sowie einem unkontrollierten und relativ starken Molekulargewichtsabbau und damit in einem schwankenden Eigenschaftsprofil der Produkte; überdies sind hochviskose Produkte über das Gasphasenverfahren wegen des starken Molekulargewichtsabbaus nicht zugänglich.

Die beim Gasphasenverfahren genannten Probleme treten bei Anwesenheit eines fluiden Reaktionsmediums, wenn überhaupt, in viel geringerem Maße auf. Üblicherweise fungieren daher beim sog. Slurry-Verfahren inerte organische Solvenzien, der Reaktand Methylchlorid im Überschuss oder entsprechende Gemische hieraus als Verteilungsmedium und Wärmeträger. Das während der Aktivierungs- und Umsetzungsphase anwesende Reaktionsmedium bewirkt zum einen, über eine gleichmäßigere Alkalisierung der Cellulose und einen besseren Transport der Reaktanden in die Alkalicellulose, eine gleichmäßigere Substitution mit hoher Reproduzierbarkeit und Chemiekalienausbeute. Zum anderen wird über eine effektive Wärmeabfuhr der Prozess insgesamt besser kontrollierbar und der Molekulargewichtsabbau infolge Vermeidung lokaler Überhitzung deutlich zurückgedrängt, sodass auch sehr hochviskose Produkte zugänglich sind. Wegen dieser prozesstechnischen und produktseitigen Vorteile sind die großtechnischen Herstellverfahren weit überwiegend als Slurry-Verfahren realisiert.

Nachteilig bei dem Standard-Slurry-Verfahren, bei welchem während der Veretherungsphase die gesamten Reaktandenmengen Alkylenoxid und Methylchlorid nebeneinander vorliegen, ist der nur begrenzt einstellbare MS-Substitutionsgrad. Beispielsweise resultieren im Fall Methylhydroxypropylcellulose aus einer formal parallelen Umsetzung der Reaktanden ausschließlich Produkte mit hohem DS (Methyl) und niedrigem MS (Hydroxypropyl). Die umgekehrte Produktvariante, d.h. hoher MS (Hydroxypropyl) und mittlerer bis niedriger DS (Methyl), ist bei dieserart Verfahrensweise aus reaktionskinetischen Gründen auch durch Steigerung der Einsatzmenge Propylenoxid nicht zugänglich. Besagte hoch propoxylierte MC-Derivate sind jedoch gerade wegen einer Reihe substanzspezifischer Eigenschaften von Interesse.

Gemäß US-A 4096325 sind hoch propoxylierte MC-Derivate darstellbar, wenn die Hydroxypropylierung und die Methylierung weitgehend getrennt durchgeführt werden. Als ebensolche Variante beschreibt z.B. EP-A 567869 die schrittweise Umsetzung der generierten Alkalicellulose zunächst mit Propylenoxid und nachfolgend in einem Lösungsmittel mit Methylchlorid. Dieserart lassen sich der DS-Wert und der MS-Wert gezielt über einen weiten Bereich variieren.

JP-A 10 158 302 und DE-A 401 51 60 beschreiben jeweils die Herstellung von klar löslichen Hydroxypropylmethylcellulosen, wobei zunächst die Cellulose alkalisiert und dann mit Methylchlorid und Propylenoxid umgesetzt wird. In wie weit das Alkylierungsmittel bereits ganz oder teilweise bei der Alkalisierung zugegen sein darf, wird nicht offenbart.

JP-A 60 192 702 betrifft ein Verfahren zur Herstellung von Hydroxyalkylcellulosen, wobei durch eine bestimmte mehrstufige Zuführung des Alkylierungsmittels die Nebenproduktbildung verringert wird. Der Lehre dieses Dokuments nach soll es entscheidend sein, dass nicht mehr als 80 Gewichtsprozent des Allcylierungsmittels vor der Hydroxyalkylierung zugegen sind.

Bei den angeführten Verfahrensvarianten mit gestufter Reaktionsführung wird im allgemeinen die Hydroxypropylierung bei hohen Temperaturen durchgeführt. Dagegen erfolgt die Methylierung, bei per se stark exothermen Reaktionsverlauf, unter Gegenkühlung bei relativ niedrigeren Temperaturen. Aufgrund der langen Prozesszeiten und des gegenläufigen Energiestromes sind diese Verfahren im Hinblick Wirtschaftlichkeit für eine großtechnische Umsetzung wenig geeignet. Zudem treten mit zunehmender Trennung der Reaktionsschritte, analog dem Gasphasenverfahren, Probleme hinsichtlich Gleichmäßigkeit und Reproduzierbarkeit der Substitution, Temperaturführung und Molekulargewichtsabbau (Viskositätsausbeute) auf.

Aufgrund der oben genannten Nachteile der bislang entwickelten und beschriebenen Herstellungsvarianten bestand fortgesetzt Bedarf in Richtung eines vereinfachten Verfahrens, welches sowohl die prozesstechnischen und die produktbezogenen als auch die wirtschaftlichen Vorteile eines Slurry-Verfahrens mit einer dem Gasphasenverfahren entsprechenden Flexibilität bezüglich Erreichbarkeit und Gestaltung der anteiligen MS- und DS-Substitutionsgrade in einem weiten Bereich erbringt.

Aufgabe der nachfolgend beschriebenen Erfindung war daher die Bereitstellung eines Verfahrens zur Herstellung von Alkylhydroxyalkylcellulosen, wie z.B. Methylhydroxyethylcellulose und Methylhydroxypropylcellulose, das bei hoher Reproduzierbarkeit und Chemikalienausbeute eine breite Variation der MS- und DS-Substitutionsgrade sowie der Produktviskositäten ermöglicht.

Überraschenderweise wurde eine Problemlösung derart gefunden, dass in Form eines Slurry-Verfahrens mit vergleichsweise geringer stöchiometrischer Entzerrung des Reaktionssystems und thermisch stark forcierter Prozessführung die verfahrenstechnisch und wirtschaftlich bislang nur eingeschränkt bzw. nicht zugänglichen Produkte erhalten werden.

Die Erfindung betrifft ein gegenüber dem Stand der Technik verbessertes Verfahren zur Herstellung von Alkylhydroxyalkylcellulosen aus Cellulose und Alkylierungsmitteln in Gegenwart von Alkalilauge und einem oder mehreren Suspensionsmittel sowie die Separierung und Reinigung der Umsetzungsprodukte bevorzugt durch Heißwasserwäsche oder Wäsche mit organischen Medien.

Gegenstand der Erfindung ist ein Verfahren zur Herstellung von Alkylhydroxyalkylcellulosen aus der Umsetzung von Cellulose in Gegenwart von Alkali mit Alkylierungsmittel und Hydroxyalkylierungsmittel, dadurch gekennzeichnet, dass man
a) die Cellulose mit 0,9 bis 2,9 Äquivalenten Alkalihydroxid /AGU, eingesetzt als wässrige Lauge, in Gegenwart eines Suspensionsmittels, welches Alkylierungsmittel enthält, wobei sich die Menge Alkylhalogenid nach folgender Formel berechnet: [Equivalente Alkalihydroxid ges. pro AGU] bis [Equivalente Alkalihydroxid ges. pro AGU plus 4,5], alkalisiert,
b) die alkalisierte Cellulose mit Alkylierungsmittel und dem Hydroxyalkylierungsmittel bei einer Temperatur größer 65°C umsetzt und
c) wiederum Alkalihydroxid, eingesetzt als wässrige Lauge, zudosiert und
d) die erhaltene Alkylhydroxyalkylcellulose aus dem Reaktionsgemisch isoliert und
gegebenenfalls reinigt.

Als reaktionstechnischer Kernteil des erfindungsgemäß verbesserten Herstellverfahrens, wird Cellulose in Gegenwart von definierten Mengen und Verhältnissen an Alkylierungsmittel und Suspensionsmittel zunächst alkalisiert (aktiviert), durch gezielte Zudosierung definierter Mengen Hydroxyalkylierungsmittel in einer ersten Phase teilweise verethert und zur weiteren Veretherung wird in einer zweiten Phase jeweils eine weitere definierte Menge an Alkalihydroxid nachdosiert.

Als geeignetes Ausgangsmaterial ist Cellulose in Form von Holzzellstoff oder Baumwollinters zu nennen. Des weiteren können auch andere Polysaccharide, wie z.B. Guar, Stärke usw., eingesetzt werden. Die Lösungsviskosität der Veretherungsprodukte lässt sich durch geeignete Auswahl der Polysaccharide in weiten Bereichen variieren. Bevorzugt geeignet sind gemahlener Holzzellstoff und gemahlene Linters-Cellulose oder Mischungen aus diesen.

Die Alkalisierung (Aktivierung) der Polysaccharide erfolgt mit anorganischen Basen, bevorzugt mit Alkalihydroxiden in wässriger Lösung, wie Natriumhydroxid und Kaliumhydroxid, bevorzugt mit 35 bis 60 %iger Natronlauge, besonders bevorzugt mit 48 bis 52 %iger Natronlauge.

Als Suspensionsmittel können Dimethylether (DME), C₅-C₁₀-Alkane, wie z.B. Cyclohexan oder Pentan, Aromaten, wie z.B. Benzol oder Toluol, Alkohole, wie z.B. i-Propanol oder t-Butanol, Ketone, wie z.B. Butanon oder Pentanon, offenkettige oder cyclische Ether, wie z.B. Dimethoxyethan oder 1,4-Dioxan, sowie Mischungen der angeführten Suspensionsmittel in wechselnden Mengenverhältnissen eingesetzt werden. Das besonders bevorzugte inerte Suspensionsmittel ist Dimethylether (DME).

Als Alkylierungsmittel können geradkettige oder verzweigte C₁ bis C₆-Alkylhalogenide, gegebenenfalls auch im Gemisch, insbesondere Methylchlorid (MCL), Ethylchlorid, Ethylbromid und Propylhalogenide, wie z.B. Propyljodid eingesetzt werden. Bevorzugt sind Methylchlorid und Ethylchlorid, besonders bevorzugt ist Methylchlorid. Ebenso können Alkylierungsreagenzien mit ionischen Funktionalitäten, wie z.B. Monochloressigsäure, N-(2-Chlorethyl)diethylamin und Vinylsulfonsäure, verwendet werden.

Geeignete Hydroxyalkylierungsmittel zum Einführen von Hydroxyalkylgruppierungen sind bevorzugt Ethylenoxid (EO), Propylenoxid (PO), Butylenoxid (BO) und Acrylnitril. Besonders bevorzugt ist Ethylenoxid. Zur graduell variierbaren Vemetzung der Celluloseether im Zuge der Herstellung können auch bifunktionelle Reagenzien, wie z.B. bevorzugt Dichlorethan oder Epichlorhydrin, eingesetzt werden.

Das erfindungsgemäße Verfahren dient zur Herstellung von binären, ternären und quartemären Alkylhydroxyalkylcellulosen (AHAC), bevorzugt zur Herstellung der binären Derivate Methylhydroxyethylcellulose (MHEC) und Methylhydroxypropylcellulose (MHPC), besonders bevorzugt zur Herstellung von Methylhydroxyethylcellulose.

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben.

Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Die Bestimmung der Seitengruppen erfolgt anhand der Zeisel-Methode (Literatur: G. Bartelmus und R. Ketterer, Z. Anal. Chem. 286 (1977) 161-190).

Bei der praktischen Durchführung des Verfahrens wird gemahlene oder zerfaserte Cellulose im Regelfall inertisiert vorgelegt. Anschließend wird das cellulosische Substrat in einem Gemisch z. B. aus DME/MCL suspendiert, wobei das Verhältnis DME/Cellulose 4/1 bis 0,4/1 Gewichtsteile, bevorzugt 3/1 bis 0,7/1 Gewichtsteile und besonders bevorzugt 2/1 bis 0,8/1 Gewichtsteile beträgt. Die Menge an MCL im ersten Prozessschritt beträgt eq MCL I = eq NaOH pro AGU bis maximal eq MCL I = eq NaOH pro AGU plus 4,5.

Die Alkalisierung der eingesetzten Cellulose erfolgt mit 0,9 bis 2,9 eq NaOH pro AGU, bevorzugt mit 1,3 bis 2,7 eq NaOH pro AGU, besonders bevorzugt mit 1,7 bis 2,5 eq NaOH pro AGU. In der Regel wird die Alkalisierung bei Temperaturen von 15 bis 50°C, bevorzugt um 40°C, und während 20 bis 80 Minuten, bevorzugt während 30 bis 60 Minuten, durchgeführt. Bevorzugt wird das NaOH in Form einer 35 bis 60 gewichtsprozentigen wässrigen Lösung eingesetzt, besonders bevorzugt als 48 bis 52 %ige Natronlauge.

Nach der Alkalisierungsphase wird das Hydroxyalkylierungsmittel, z.B. Ethylenoxid (EO) bei der Herstellung von Methylhyethylcellulose, zudosiert und die Reaktion thermisch durch Aufheizen forciert. Die Zugabe des Hyxdroxyalkylierungsmittels kann auch während der Aufheizphase geschehen. Die Reaktion mit dem Hydroxyalkylierungsmittel (beispielsweise EO) und MCL erfolgt bei 60 bis 110°C, bevorzugt bei 65 bis 90°C, besonders bevorzugt bei 75 bis 85°C. Je nach angestrebter Substitutionshöhe wird die Zugabemenge an Hydroxyalkylierungsmittel gezielt eingestellt. Für die in verschiedenen Anwendungsbereichen derzeit gängig eingesetzten MHEC-Produkte liegt die anzuwendende EO Menge bei 0,02 bis 1,5 eq pro AGU, bevorzugt bei 0,05 bis 1,0 eq pro AGU, besonders bevorzugt bei 0,1 bis 0,7 eq pro AGU. Hierdurch werden MHEC mit einem MS (HE) von 0,02 bis 1,2, bevorzugt mit einem MS (HE) von 0,03 bis 0,8 und besonders bevorzugt mit einem MS (HE) von 0,05 bis 0,6 hergestellt. Für die in verschiedenen Anwendungsbereichen derzeit gängig eingesetzten MHPC-Produkte liegt die anzuwendende PO Menge bei 0,05 bis 5 eq pro AGU, bevorzugt bei 0,1 bis 2,5 eq pro AGU, besonders bevorzugt bei 0,2 bis 1,6 eq pro AGU. Hierdurch werden MHPC mit einem MS (HP) von 0,05 bis 3,3, bevorzugt mit einem MS (HP) von 0,07 bis 1,8 und besonders bevorzugt mit einem MS (HP) von 0,15 bis 1,2 hergestellt. Die Zugabe des Hydroxyalkylierungsmittels zum Reaktionssystem kann in einem oder portioniert in mehreren Dosierschritten erfolgen, bevorzugt ist die Dosierung in einem Schritt, besonders bevorzugt in einem Schritt direkt im Anschluss an die Alkalisierungsphase.

Nach der ersten Veretherungsphase wird ohne wesentliche Abkühlung eine weitere Menge Alkalihydroxid in Form einer wässrigen Lösung zudosiert. Bevorzugt wird NaOH in Form einer 35 bis 60 gewichtsprozentigen wässrigen Lösung eingesetzt, besonders bevorzugt als 48 bis 52 %ige Natronlauge. Die eingesetzte Menge nachdosierten NaOH (NaOH II) beträgt minimal 0,2 eq pro AGU und die gesamt eingesetzte Menge Alkalihydroxid (NaOH ges.) minimal 1,5 eq pro AGU. Bevorzugt werden 0,5 bis 5,0 eq NaOH II pro AGU als Nachdosierung eingesetzt, besonders bevorzugt werden 0,8 bis 2,9 eq NaOH II pro AGU als Nachdosierung eingesetzt, am meisten bevorzugt werden 1,0 bis 2,5 eq NaOH II pro AGU als Nachdosierung eingesetzt.

Nach Ende der zweiten Veretherungsphase werden alle flüchtigen Bestandteile destillativ unter ggf. Anwendung von vermindertem Druck abgetrennt. Die Reinigung, Trocknung und Mahlung des resultierenden Produktes erfolgt nach den in der Cellulosederivat-Technologie üblichen Methoden gemäß dem Stand der Technik.

Die nachfolgenden Beispiele sollen das erfindungsgemäße Verfahren erläutern und die resultierenden Produkte beschreiben, ohne die Erfindung zu beschränken:

### Beispiele

In den folgenden Beispielen steht die Einheit 'eq' für das molare Verhältnis des jeweiligen Einsatzstoffes relativ zur Anhydroglucoseeinheit (AGU) der eingesetzten Cellulose.

### Beispiele und Vergleichsbeispiele 1 bis 6 (MHPC)

Bei ansonsten vergleichbaren Bedingungen liefert das erfindungsgemäße Verfahren Produkte mit deutlich höheren DS (M)-Werten und deutlich höheren MS (HP)-Werten (relativ zu den Vergleichsbeispielen) bei gleichen Rohstoffeinsatzmengen bzgl. Natronlauge, Methylchlorid und Propylenoxid.

In einem 5 1 Autoklaven werden 257 g Baumwoll-Linters (Feuchte: 5,2 %; GVZ in Cuen: 1728-1750 ml/g) durch Evakuieren und Beaufschlagen mit Stickstoff inertisiert. Anschließend wird ein Gemisch aus 145 g Dimethylether und **y eq** Chlormethan in den Reaktor dosiert. Dann werden **v eq** Natriumhydroxid in Form einer 50 gew.-%igen wässrigen Natronlauge unter Rühren auf die Cellulose gesprüht. Nachdem noch 60 Minuten bei 25°C gerührt worden ist, werden 0,8 eq Propylenoxid in den Reaktor dosiert und das Gemisch wird auf 85°C geheizt. Nachdem 120 Minuten bei 85°C gerührt worden ist, wird bei dieser Temperatur **w eq** Natriumhydroxid in Form einer 50 gew.-%igen wässrigen Natronlauge dosiert. Anschließend wird weitere 120 Minuten bei 85°C umgesetzt und dann gekühlt. Die flüchtigen Bestandteile werden abdestilliert und der Reaktor evakuiert.

Das Rohprodukt wird zweimal einer Wäsche mit heißem Wasser unterworfen, anschließend getrocknet und gemahlen.

Der Substitutionsgrad durch Methylgruppen (DS-M), der Substitutionsgrad durch Hydroxypropylgruppen (MS-HP) und die Viskosität (V1) in 1 %iger wässriger Lösung (D= 2,55s⁻¹, 20°C, Rotationsviskosimeter) der so erhaltenen Hydroxypropylmethylcelluloseether sind in Tabelle 1 gelistet. Der NaCl-Gehalt betrug bei allen Produkten < 0,1 %.

**Tabelle 1**

| Beispiel | v | w | v+w | Y | DS(M) | MS (HP) | V1 | Vergleich/ Erfindung |
|---|---|---|---|---|---|---|---|---|
| 1. | 2,6 | 0 | 2,6 | 4,33 | 1,55 | 0,24 | 14.200 | V |
| 2. | 2,0 | 0,6 | 2,6 | 4,33 | 1,60 | 0,27 | 6.500 | E |
| 3. | 2,9 | 0 | 2,9 | 4,63 | 1,61 | 0,20 | 14.000 | V |
| 4. | 2,0 | 0,9 | 2,9 | 4,63 | 1,68 | 0,25 | 5.000 | E |
| 5. | 3,5 | 1,5 | 3,5 | 5,23 | 1,75 | 0,16 | 13.700 | V |
| 6. | 2,0 | 1,5 | 3,5 | 5,23 | 1,78 | 0,21 | 5.700 | E |

### Beispiele und Vergleichsbeispiele 7 bis 12 (MHPC)

Bei ansonsten vergleichbaren Bedingungen liefert das erfindungsgemäße Verfahren ein Produkt mit deutlich höheren DS (M)-Wert (relativ zum Vergleichsbeispiel 27 und 28) und deutlich höhere MS(HP)-Werten (relativ zum Vergleichsbeispiel 23) bei gleichem Rohstoffeinsatzmenge bzgl. Ethylenoxid und Propylenoxid.

In einem 51 Autoklaven werden 257 g Baumwoll-Linters (Feuchte: 5,2 %; GVZ in Cuen: 1750 ml/g) durch Evakuieren und Beaufschlagen mit Stickstoff inertisiert. Anschließend wird ein Gemisch aus **x g** Dimethylether und **y eq** Chlormethan in den Reaktor dosiert. Dann werden **v eq** Natriumhydroxid in Form einer 50 gew.-%igen wässrigen Natronlauge unter Rühren auf die Cellulose gesprüht. Nachdem noch 60 Minuten bei 25°C gerührt worden ist, werden 0,8 eq Propylenoxid in den Reaktor dosiert und das Gemisch wird auf 85°C geheizt. Nachdem 120 Minuten bei 85°C gerührt worden ist, wird bei dieser Temperatur **w eq** Natriumhydroxid in Form einer 50 gew.-%igen wässrigen Natronlauge in den Reaktor dosiert. Anschließend wird weitere 120 Minuten bei 85°C umgesetzt und dann gekühlt. Die flüchtigen Bestandteile werden abdestilliert und der Reaktor evakuiert.

Das Rohprodukt wird zweimal einer Wäsche mit heißem Wasser unterworfen, anschließend getrocknet und gemahlen.

Der Substitutionsgrad durch Methylgruppen (DSM), der Substitutionsgrad durch Hydroxypropylgruppen (MS-HP) und die Viskosität (V1) in 1%iger wässriger Lösung (D = 2,55s⁻¹, 20°C, Rotationsviskosimeter) der so erhaltenen Hydroxypropylmethylcelluloseether sind in Tabelle 4 gelistet. Der NaCl-Gehalt betrug bei allen Produkten <0,1%.

**Tabelle 4**

| Beispiel | v | w | v+w | x | Y | DS (M) | MS (HP) | V1 | Vergleich/ Erfindung |
|---|---|---|---|---|---|---|---|---|---|
| 7. | 3,5 | 0 | 3,5 | 287 | 5,23 | 1,75 | 0,12 | 13100 | V |
| 8. | 2,5 | 1,0 | 3,5 | 194 | 5,23 | 1,77 | 0,19 | 7200 | E |
| 9. | 1,5 | 2,0 | 3,5 | 102 | 5,23 | 1,73 | 0,22 | 1800 | E |
| 10. | 1,2 | 2,3 | 3,5 | 74 | 5,23 | 1,71 | 0,24 | 3200 | E |
| 11. | 0,8 | 2,7 | 3,5 | 37 | 5,23 | 1,55 | 0,23 | Bodensatz | V |
| 12. | 0,4 | 3,1 | 3,5 | 0 | 5,23 | 1,64 | 0,20 | Bodensatz | V |

### Beispiele und Vergleichsbeispiele 13 und 14 (HEHPMC)

Bei ansonsten vergleichbaren Bedingungen liefert das erfindungsgemäße Verfahren ein Produkt mit deutlich höheren MS (HE)- und MS (HP)-Werten bei gleichem Rohstoffeinsatzmenge bzgl. Ethylenoxid und Propylenoxid.

In einem 51 Autoklaven werden 254-257 g Baumwoll-Linters (Feuchte 4,2 %; GVZ_{Cuen}: 1750 ml/g) durch Evakuieren und Beaufschlagen mit Stickstoff inertisiert. Anschließend wird ein Gemisch aus 201 g Dimethylether und **y eq** Chlormethan in den Reaktor dosiert. Dann werden **v eq** Natriumhydroxid in Form einer 50 gew.-%igen wässrigen Natronlauge unter Rühren auf die Cellulose gesprüht. Nachdem noch 60 Minuten bei 25°C gerührt worden ist, werden 0,6 eq Propylenoxid und 0,4 eq Ethylenoxid in den Reaktor dosiert und das Gemisch wird auf 85°C geheizt. Nachdem 120 Minuten bei 85°C gerührt worden ist, werden bei dieser Temperatur **w eq** Natriumhydroxid in Form einer 50 gew.-%igen wässrigen Natronlauge in den Reaktor dosiert. Anschließend wird weitere 120 Minuten bei 85°C umgesetzt und dann gekühlt. Die flüchtigen Bestandteile werden abdestilliert und der Reaktor evakuiert.

Das Rohprodukt wird zweimal einer Wäsche mit heißem Wasser unterworfen, anschließend getrocknet und gemahlen.

Der Substitutionsgrad durch Methylgruppen (DS M), der Substitutionsgrad durch Hydroxyethylgruppen (MS HE), der Substitutionsgrad durch Hydroxypropylgruppen (MS HP und die Viskosität (V2) in 2%iger wässriger Lösung (D= 2,55s⁻¹, 20°C, Rotationsviskosimeter) der so erhaltenen Hydroxyethylhydroxypropylmethylcelluloseether sind in Tabelle 6 gelistet. Der NaCl-Gehalt betrug bei allen Produkten < 0,1 %.

**Tabelle 6**

| Beispiel | v | w | v+w | y | DS (M) | MS (HP) | MS (HE) | V2 | Vergleich / Erfindung |
|---|---|---|---|---|---|---|---|---|---|
| 13 | 2,6 | 0 | 2,6 | 4,33 | 1,50 | 0,16 | 0,17 | 71000 | V |
| 14 | 1,0 | 1,6 | 4,33 | 2,6 | 1,53 | 0,21 | 0,32 | 22800 | E |

### Beispiele und Vergleichsbeispiele 15 und 16 (MHEC)

Bei ansonsten vergleichbaren Bedingungen liefert das erfindungsgemäße Verfahren ein vergleichbares Produkt bei deutlich niedriger Rohstoffeinsatzmenge bzgl. Ethylenoxid.

In einem 400 1 Autoklaven werden 28,6 kg Holzzellstoff (Feuchte: 4,8 %; GVZ in Cuen: 1245 ml/g) und 7,0 kg Holzzellstoff (Feuchte: 3,1 %; GVZ in Cuen: 826-937 ml/g) durch Evakuieren und Beaufschlagen mit Stickstoff inertisiert. Anschließend wird ein Gemisch aus 65,8 kg Dimethylether und **y eq** Chlormethan in den Reaktor dosiert. Dann werden **v eq** Natriumhydroxid in Form einer 50 gew.-%igen wässrigen Natronlauge unter Rühren in ca. 15 min unter einen Temperaturanstieg von 33°C bis ca. 40°C auf die Cellulose gesprüht. Nachdem noch 35 Minuten unter einen erneuten Temperaturanstieg von 40°C auf ca. 50°C gerührt worden ist, werden **u eq** Ethylenoxid über ca. 16 min in den Reaktor dosiert dabei wird das Gemisch auf 64°C geheizt. Nachdem 30 Minuten bei 64°C gerührt worden ist, wird in 25 min auf 80°C geheizt. In weiteren 15 Minuten wird auf 84°C geheizt. Bei dieser Temperatur wird **w eq** Natriumhydroxid in Form einer 50 gew.%igen wässrigen Natronlauge dosiert. Anschließend wird weitere 65 Minuten bei ca. 86°C umgesetzt. Die flüchtigen Bestandteile werden abdestilliert und der Reaktor evakuiert.

Das Rohprodukt wird zweimal einer Wäsche mit heißem Wasser unterworfen, anschließend getrocknet und gemahlen.

Der Substitutionsgrad durch Methylgruppen (DS-M), der Substitutionsgrad durch Hydroxyethylgruppen (MS-HE) und die Viskosität (V2) in 2 %iger wässriger Lösung (D= 2,55s⁻¹, 20°C, Rotationsviskosimeter) der so erhaltenen Hydroxyethylmethylcelluloseether sind in Tabelle 9 gelistet. Der NaCl-Gehalt betrug bei allen Produkten zwischen 1,4 - 2,7%

**Tabelle 9**

| | eq HCl | eq NaOH I | eq NaOH II | | eq EO | | | | |
|---|---|---|---|---|---|---|---|---|---|
| Beispiel | y | v | w | v+w | u | DS(M) | MS(HE) | V2 | Vergleich/ Erfindung |
| 15. | 6,2 | 4,2 | 0 | 4,2 | 0,31 | 1,95 | 0,11 | 27050 | V |
| 16. | 6,2 | 2,2 | 2,0 | 4,2 | 0,19 | 1,92 | 0,11 | 27860 | E |

## Patentansprüche

1. Verfahren zur Herstellung von Alkylhydroxyalkylcellulose aus der Umsetzung von Cellulose in Gegenwart von Alkali mit Alkylierungsmittel und Hydroyalkylierungsmittel, **dadurch gekennzeichnet, dass** man
a) die Cellulose mit 0,9 bis 2,9 Äquivalenten Alkalihydroxid /AGU, eingesetzt als wässrige Lauge, in Gegenwart eines Suspensionsmittels, welches Alkylhalogenid enthält, wobei sich die Menge Alkylhalogenid nach folgender Formel berechnet: [Equivalente Alkalihydroxid ges. pro AGU] bis [Equivalente Alkalihydroxid ges. pro AGU plus 4,5], alkalisiert,
b) die alkalisierte Cellulose mit Alkylierungsmittel und Hydroxyalkylierungsmittel bei einer Temperatur größer 65°C umsetzt und
c) wiederum Alkalihydroxid, eingesetzt als wässrige Lauge, zudosiert und
d) die erhaltene Alkylhydroxyalkylcellulose aus dem Reaktionsgemisch isoliert und gegebenenfalls reinigt.

2. Verfahren nach Anspruch 1, **dadurch gekennzeichnet, dass** man als Suspensionsmittel Dimethylether einsetzt.

3. Verfahren nach einem der Ansprüche 1 bis 2, **dadurch gekennzeichnet; dass** man als Alkylierungsmittel ein Alkylhalogenid aus der Gruppe Methylchlorid, Ethylchlorid, Ethylbromid, Propyljodid oder deren Gemische einsetzt.

4. Verfahren nach einem der vorherigen Ansprüche, **dadurch gekennzeichnet, dass** man als Hydroxyalkylierungsmittel ein oder mehrere Alkylenoxide aus der Gruppe Ethylenoxid, Propylenoxid, Butylenoxid oder deren Gemische einsetzt.

5. Verfahren nach einem der vorherigen Ansprüche, **dadurch gekennzeichnet, dass** die alkalisierte Cellulose in den Schritten b) und c) bei einer Temperatur im Bereich von 65 bis 110°C mit einem oder mehreren Alkylenoxiden und mindestens einem Alkylhalogenid umgesetzt wird, wobei die Dosierung der Menge Alkalihydroxid, die in Schritt c) dosiert wird in diesem Temperaturbereich stattfindet.

6. Verfahren nach einem der vorherigen Ansprüche, **dadurch gekennzeichnet, dass** als Alkylhydroxyalkylcellulose Methylhydroxypropylcellulose hergestellt wird oder Methylhydroxyethylcellulose hergestellt wird.

7. Verfahren zur Herstellung von Methylhydroxyethylcellulose mit einem DS (M) von 1,6-2,2 und einem MS (HE) von 0,02 - 1,2 **dadurch gekennzeichnet, dass** man Cellulose in einem Gemisch aus DME und MCl aufschlämmt, wobei die Einsatzmenge DME 0,8 bis 3 Gew.-Teile je Gew.-Teil Cellulose und die Einsatzmenge MCl I 2,1-7,2 Äquivalente / AGU beträgt, anschließend die Cellulose durch Zugabe von 1,3-2,7 Äquivalenten Alkalihydroxid in Form einer wässrigen Lauge alkalisiert und dann das Gemisch auf 65-90°C heizt und gleichzeitig 0,02-1,5 Äquivalente EO/AGU zudosiert und zur Reaktion bringt, anschließend weitere 0,8-2,9 Äquivalenten Alkalihydroxid in Form einer wässrigen Lauge zudosiert und das Gemisch reagieren lässt um anschließend die entstandene MHEC als Produkt zu isolieren und zu reinigen.

## Claims

1. Process for preparing alkylhydroxyalkylcelluloses by reaction of cellulose in the presence of alkali metal hydroxide with an alkylating agent and a hydroxyalkylating agent, **characterized in that**
a) the cellulose is alkalized by means of 0.9 to 2.9 equivalents of alkali metal hydroxide/AGU, used as aqueous alkali metal hydroxide solution, in the presence of a suspension medium containing alkyl halide, with the amount of alkyl halide being calculated according to the following formula: [tot. equivalents of alkali metal hydroxide per AGU] to [tot. equivalents of alkali metal hydroxide per AGU plus 4.5],
b) the alkalized cellulose is reacted with alkylating agent and hydroxyalkylating agent at a temperature above 65°C and
c) alkali metal hydroxide, used as aqueous alkali metal hydroxide solution, is again metered in and
d) the alkylhydroxyalkylcellulose obtained is then isolated from the reaction mixture and purified if appropriate.

2. Process according to Claim 1, **characterized in that** the suspension medium used is dimethyl ether.

3. Process according to Claim 1 or 2, **characterized in that** the alkylating agent used is an alkyl halide selected from the group consisting of methyl chloride, ethyl chloride, ethyl bromide, propyl iodide and mixtures thereof.

4. Process according to any of the preceding claims, **characterized in that** one or more alkylene oxides selected from the group consisting of ethylene oxide, propylene oxide and butylene oxide are used as hydroxyalkylating agents.

5. Process according to any of the preceding claims, **characterized in that** the alkalized cellulose is reacted in steps b) and c) and d) at a temperature in the range from 65 to 110°C with one or more alkylene oxides and at least one alkyl halide, where the addition of the portion of alkali metal hydroxide introduced in step c) and the addition of the portion of alkyl halide introduced in step d) takes place in this temperature range.

6. Process according to any of the preceding claims, **characterized in that** the alkylhydroxyalkylcellulose prepared is methylhydroxypropylcellulose or methylhydroxyethylcellulose.

7. Process for preparing methylhydroxyethylcellulose having a DS (M) of 1.6-2.2 and an MS (HE) of 0.02 - 1.2, **characterized in that** cellulose is slurried in a mixture of DME and MCL, where the amount of DME used is from 0.8 to 3 parts by weight per part by weight of cellulose and the amount of MCL I used is 2.1-7.2 equivalents / AGU, the cellulose is subsequently alkalized by addition of 1.3-2.7 equivalents of alkali metal hydroxide in the form of an aqueous alkali metal hydroxide solution and the mixture is then heated to 65-90°C and at the same time 0.02-1.5 equivalents of EO/AGU are introduced and reacted, a further 0.8-2.9 equivalents of alkali metal hydroxide in the form of an aqueous alkali metal hydroxide solution are subsequently introduced and the mixture is allowed to react and the MHEC formed is subsequently isolated and purified as product.

## Revendications

1. Procédé de préparation d'alcoylhydroxyalcoylcellulose par réaction de cellulose en présence d'alcalin, avec un agent d'alcoylation et un agent d'hydroxyalcoylation, **caractérisé en ce que** :
a) la cellulose est alcalinisée avec 0,9 à 2,9 équivalents d'hydroxyde alcalin/AGU, mis en oeuvre sous forme d'une lessive aqueuse, en présence d'un agent de suspension, qui contient un halogénure d'alcoyle, où la quantité d'halogénure d'alcoyle est calculée par la formule suivante : [équivalents d'hydroxyde alcalin saturé par AGU] à [équivalents d'hydroxyde alcalin saturé par AGU plus 4,5] ;
b) la cellulose alcanilisée est mise à réagir avec un agent d'alcoylation et un agent d'hydroxyalcoylation à une température supérieure à 65°C, et
c) on ajoute à nouveau, de l'hydroxyde d'alcalin, mis en oeuvre sous forme de lessive aqueuse,
d) l'alcoylhydroxyalcoylcellulose obtenue est isolée du mélange réactionnel et le cas échéant, purifiée.

2. Procédé selon la revendication 1, **caractérisé en ce que** l'on met en oeuvre le diméthyléther comme agent de suspension.

3. Procédé selon l'une des revendications 1 à 2, **caractérisé en ce que** l'on met en oeuvre comme agent d'alcoylation, un halogénure d'alcoyle du groupe du chlorure de méthyle, du chlorure d'éthyle, du bromure d'éthyle, de l'iodure de propyle ou de leurs mélanges.

4. Procédé selon l'une des revendications précédentes, **caractérisé en ce que** l'on met en oeuvre comme agent d'hydroxyalcoylation, un ou plusieurs oxydes d'alcoylène du groupe de l'oxyde d'éthylène, l'oxyde de propylène, l'oxyde de butylène ou leurs mélanges.

5. Procédé selon l'une des revendications précédentes, **caractérisé en ce que** l'on fait réagir la cellulose alcalinisée aux étapes b) et c), à une température située dans l'intervalle allant de 65 à 110°C, avec un ou plusieurs oxydes d'alcoylène et au moins un halogénure d'alcoyle, où l'addition de la quantité d'hydroxyde d'alcalin, qui est ajoutée à l'étape c), se produit dans cet intervalle de température.

6. Procédé selon l'une des revendications précédentes, **caractérisé en ce que** l'on prépare comme alcoylhydroxyalcoylcellulose, la méthylhydroxypropyl-cellulose ou la méthylhydroxyéthylcellulose.

7. Procédé de préparation de méthylhydroxyéthylcellulose avec un DS(M) de 1,6-2,2 et un MS(HE) de 0,02-1,2, **caractérisé en ce que** l'on met en suspension la cellulose dans un mélange de DME et de MCl, où la quantité mise en oeuvre de DME s'élève de 0,8 à 3 parties en poids par partie en poids de cellulose et la quantité mise en oeuvre de MCl à 2,1-7,2 équivalents/AGU, ensuite la cellulose est alcalinisée par addition de 1,3-2,7 équivalents d'hydroxyde alcalin sous forme d'une lessive aqueuse, puis le mélange est chauffé à 65-90°C, et simultanément, on ajoute 0,02-1,5 équivalent de EO/AGU et on fait réagir, ensuite, on ajoute 0,8-2,9 équivalents supplémentaires d'hydroxyde d'alcalin sous forme d'une lessive aqueuse et on fait réagir le mélange pour ensuite isoler la MHEC formée comme produit et purifier.
